(19) Europäisches Patentamt
European Patent Office
Office européen des brevets

(11) Publication number: **0 599 348 A1**

(12) **EUROPEAN PATENT APPLICATION**

(21) Application number: **93119131.6**

(51) Int. Cl.5: **C08G 18/32**, C08G 18/66

(22) Date of filing: **26.11.93**

(30) Priority: **27.11.92 JP 318550/92**

(43) Date of publication of application:
**01.06.94 Bulletin 94/22**

(84) Designated Contracting States:
**DE FR IT SE**

(71) Applicant: **SANYO ELECTRIC Co., Ltd.**
**5-5, Keihanhondori 2-chome**
**Moriguchi-shi, Osaka 570(JP)**

(72) Inventor: **Okoshi, Ryoji**
**474-77, Takabayashi**
**Ota-shi, Gunma(JP)**
Inventor: **Watanabe, Masato**
**6-14, Sumiyoshi,**
**Oizumi-machi**
**Ora-gun, Gunma(JP)**

(74) Representative: **Patentanwälte Grünecker, Kinkeldey, Stockmair & Partner**
**Maximilianstrasse 58**
**D-80538 München (DE)**

# (54) Heat insulating box comprising hard polyurethane foam.

(57) The present invention provides a heat insulating box comprising an outer box and an inner box, the gap therebetween being filled with a hard polyurethane foam prepared by the reaction of polyols and isocyanates in the presence of a foaming agent, in which a part or the whole of the polyols comprises one or more tertiary amino alcohols represented by the following formula (I):

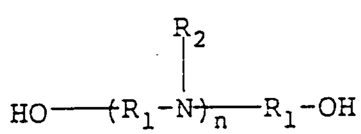

(I)

wherein substituents represented by $R_1$, which may be the same or different, each represents a straight-chain or branched alkylene group having form 2 to 24 carbon atoms, an alicyclic alkylene group, a substituted or unsubstituted cycloalkylene group, a substituted or unsubstituted arylene group, an aralkylene group or $-(CH_2CH_2O)_p-(CH_2CH_2)_q-$ (in which p represents 0 or a positive integer and q represents a positive integer); substituents represented by $R_2$, which may be the same or different, each represents a straight-chain or branched alkyl group having from 1 to 24 carbon atoms, an aryl group or an aralkyl group; and the average polymerization degree n represents a positive integer of 1 to 50.

EP 0 599 348 A1

## FIELD OF THE INVENTION

The present invention relates to a heat insulating box for use in refrigerator or showcase. More particularly, the present invention provides a heat insulating box comprising a hard polyurethane foam having excellent properties prepared free of prohibited chlorofluorocarbon (flon) as a foaming agent.

## BACKGROUND OF THE INVENTION

In general, a heat insulating box constituting a refrigerator or the like comprises an outer box and an inner box, the gap therebetween being filled with a hard polyurethane foam prepared by the reaction of a polyol component and an isocyanate component in the presence of a foaming agent, as described in JU-B-60-11430 (The term "JU-B" as used herein means an "examined Japanese utility model publication"). The hard polyurethane foam may be normally obtained by reacting a polyol component with an isocyanate component in the presence of a foaming agent, a reaction catalyst and a foam stabilizer. In general, a hard polyurethane foam having closed cells with excellent insulating properties can be obtained with a high productivity. In the production of such a hard polyurethane foam, as the foaming agent there has been commonly used trichloromonofluoromethane (R11), which exhibits an extremely small gas heat conductivity and a low boiling point, stays liquid at ordinary temperatures and is further excellent in other properties, e.g., nonflammability and low toxicity (see JP-A-62-81414 (The term "JP-A" as used herein means an "unexamined published Japanese patent application")).

However, the foregoing foaming agent has the following disadvantages which have been desired to be eliminated as early as possible.

Trichloromonofluoromethane (R11), which has been commonly used as a foaming agent in the prior art, is one of difficultly decomposable CFC's (chloro fluoro carbon; chlorofluoro-substituted hydrocarbon). When this kind of a difficultly decomposable CFC is released to the atmosphere, it reportedly gives an adverse effect on the ozone layer in the stratosphere and a greenhouse effect that gives a rise in the temperature of the surface of the earth. Thus, difficultly decomposable CFC's have recently caused a global environmental pollution. There is a strong movement to regulate the production and consumption of these difficultly decomposable CFC's.

Accordingly, the selection of alternatives has been carried out on a global basis. As the most favorable candidate for the foaming agent there has been proposed 1,1-dichloro-2,2,2-trifluoroethane (R123), which is an easily decomposable CFC.

However, 1,1-dichloro-2,2,2-trifluoroethane (R123) is disadvantageous in that it has a gas heat conductivity of about 10% greater than that of trichloromonofluoromethane (R11), which has heretofore been used in the prior art, and a hard polyurethane foam produced in the presence thereof exhibits poor heat insulating properties. Due to its high boiling point, 1,1-dichloro-2,2,2-trifluoroethane (R123) exhibits a low reactivity, causing deterioration of the physical properties of the resulting hard polyurethane foam, e.g., compression strength drop, dimensional stability drop, prolongation of time required for mold release.

As an unprohibited refrigerator medium or foaming agent that exhibits a low boiling point and can be expected to exhibit some insulating properties, a mixture of chlorodifluoromethane (R22) and 1-chloro-1,1-difluoroethane (R142b) has been studied for foaming technique. However, a mixture of these refrigerator media exhibits a poorer miscibility with polyether polyol than the conventional R11 and thus causes the gas to be scattered during foaming, giving an urethane foam having poor heat insulating properties. In particular, such a foam has a heat conductivity of about 0.0165 kcal/mh°C (average temperature: 23.8 °C) at present and thus exhibits too high a heat dissipation and is impracticable for, e.g., a freezer whose inner temperature needs to be kept to about -20°C.

## SUMMARY OF THE INVENTION

It is therefore an object of the present invention to provide a heat insulating box comprising a hard polyurethane foam having excellent insulating properties and adhesivity prepared free of prohibited chlorofluorocarbon.

This and other objects of the present invention are accomplished with a heat insulating box comprising an outer box and an inner box, the gap therebetween being filled with a hard polyurethane foam prepared by the reaction of polyols and isocyanates in the presence of a foaming agent, in which a part or the whole of the polyols comprises one or more tertiary amino alcohols represented by the following formula (I):

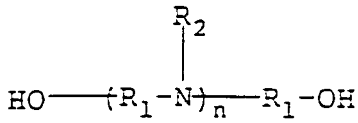

(I)

wherein substituents represented by $R_1$, which may be the same or different, each represents a straight-chain or branched alkylene group having form 2 to 24 carbon atoms, an alicyclic alkylene group, a cycloalkylene group, an arylene group, an aralkylene group or $-(CH_2CH_2O)_p-(CH_2CH_2)_q-$ (in which p represents 0 or a positive integer and q represents a positive integer); substituents represented by $R_2$, which may be the same or different, each represents a straight-chain or branched alkyl group having from 1 to 24 carbon atoms, an aryl group or an aralkyl group; and the average polymerization degree n represents a positive integer of 1 to 50.

Moreover, this and other objects of the present invention are accomplished with the foregoing heat insulating box comprising a hard polyurethane foam, which further comprises, in addition to the tertiary amino alcohol represented by formula (I), one or more tertiary amino alcohols represented by the following formula (II):

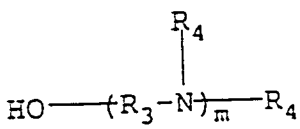

(II)

wherein substituents represented by $R_3$, which may be the same or different, each represents a straight-chain or branched alkylene group having from 2 to 24 carbon atoms, an alicyclic alkylene group, a cycloalkylene group, an arylene group, an aralkylene group or $-(CH_2CH_2O)_r-(CH_2CH_2)_s-$ (in which r represents 0 or a positive integer and s represents a positive integer); substituents represented by $R_4$, which may be the same or different, each represents a straight-chain or branched alkyl group having from 1 to 24 carbon atoms, an aryl group or an aralkyl group; and the average polymerization degree m represents a positive integer of 1 to 50.

## DETAILED DESCRIPTION OF THE INVENTION

In accordance with the foregoing constitution of the present invention, the polyol previously contains an amine which serves as an initiator. Accordingly, even if R123, R141 or 356, which is an unprohibited chlorofluorocarbon, or water is used as a foaming agent, a heat insulating box comprising a hard polyurethane foam having excellent heat insulating properties and adhesivity can be prepared. Since an amine polyether containing a tertiary amino alcohol is used as a polyether polyol, the reaction rate can be increased without adding an expensive amine catalyst because of the function of the amine as an initiator. Even if unprohibited chlorofluorocarbon such as R123, R141b and R356 having a high boiling point is used as a foaming agent, a heat insulating box having excellent insulating properties can be obtained. As a result, a heat insulating box having excellent insulating properties can be provided while meeting the environmental requirements without using as a foaming agent any prohibited chlorofluorocarbon that is likely to destroy the ozone layer. Accordingly, the thickness of the wall of the resulting box can be reduced, making it possible to increase the inner volume of refrigerators or the like.

Further, the enhancement of the reaction rate results in the reduction of the charged amount of the foaming agent, making it possible to reduce the curing and enhance the brittleness of the foam.

Moreover, the present invention can eliminate the necessity for an expensive and harmful amine catalyst which has heretofore been added additionally, making it possible to reduce the production cost while providing a good working environment.

A further problem of the prior art is that the use of R141b as a foaming agent in combination with an amine catalyst involves the generation of R1131, which is cancerogenic, as a by-product. The present invention can eliminate the necessity for such an amine catalyst, giving no adverse effect on workers.

The tertiary amino alcohol to be used in the present invention has a structure represented by formula (I). In formula (I), the substituents represented by $R_1$ may be the same or different and each represents a straight-chain or branched alkylene group having from 2 to 24 carbon atoms, an alicyclic alkylene group, a cycloalkylene group, an arylene group, an aralkylene group or $-(CH_2CH_2O)_p-(CH_2CH_2)_q-$ (in which p

represents 0 or a positive integer, preferably an integer of 0 to 15, and more preferably an integer of 1 to 10), preferably a straight-chain or branched alkylene group having from 6 to 9 carbon atoms. The cycloalkylene group and arylene group may contain substituents. The cycloalkylene group is one having 4 to 24 carbon atoms. The arylene group is one having from 7 to 24 carbon atoms. The substituents represented by $R_2$ may be the same or different and each represents a straight-chain or branched alkyl group having from 1 to 24 carbon atoms, an aryl group or an aralkyl group. The aralkyl group is an alkyl group having an aromatic ring such as benzyl group and phenethyl group. The aralkylene group represented by $R_1$ is a divalent group obtained by removing one hydrogen atom from an aralkyl group. The substituents represented by $R_2$ may be the same or different and each is preferably a straight-chain or branched alkyl group having from 1 to 4 carbon atoms, more preferably a methyl group. The average polymerization degree n is an integer of 1 to 50, preferably an integer of 1 to 30, and more preferably an integer of 2 to 18. If $R_1$ has more than 24 carbon atoms and the average polymerization degree n is greater than 50, the resulting tertiary amino alcohol has too large a molecular weight to prevent its viscosity from rising to an undesirable level depending on the number of carbon atoms contained in $R_2$ and the structure of $R_2$. On the contrary, if the number of carbon atoms contained in $R_1$ is less than 2 and n is less than 1, the content of the tertiary amino group in the molecular skeleton is too low to provide the expected catalytic properties.

Examples of the tertiary amino alcohol represented by formula (I) to be used in the present invention include tertiary amino alcohol represented by formula (I), wherein the average polymerization degree n is an integer of 2 to 50; tertiary amino alcohol represented by formula (I), wherein the substituents represented by $R_1$, which may be the same or different, each represents a straight-chain or branched alkylene group having from 6 to 9 carbon atoms, the substituents represented by $R_2$, which may be the same or different, each represents a straight-chain or branched alkyl group having from 1 to 4 carbon atoms, and the average polymerization degree n is an integer of 2 to 18; and tertiary amino alcohol represented by formula (I), wherein the substituents represented by $R_1$, which may be the same or different, each represents a straight-chain or branched alkylene group having from 6 to 9 carbon atoms, the substituents represented by $R_2$, which may be the same or different, each represents a straight-chain or branched alkyl group having from 1 to 4 carbon atoms, and the average polymerization degree n is an integer of 1 to 30.

As mentioned above, a tertiary amino alcohol represented by formula (II) may be produced depending on the reaction conditions. In the present invention, in addition to the tertiary amino alcohol represented by formula (I), one or more tertiary amino alcohols represented by formula (II) may be used in combination with the tertiary amino alcohol represented by formula (I). The tertiary amino alcohol represented by formula (II) is preferably used in an amount of 30% by weight or less of the total amount of the weight of the tertiary amino alcohol represented by formula (I) and the tertiary amino alcohol represented by formula (II). Referring to the tertiary amino alcohol represented by formula (II), $R_3$ in formula (II) may be different from $R_1$ in formula (I) but is the same meaning as $R_1$, $R_4$ in formula (II) may be different from $R_2$ in formula (I) but is the same meaning as $R_2$, and the average polymerization degree m in formula (II) may be different from the average polymerization degree n in formula (I) but is the same meaning as n. Preferred examples of $R_3$, $R_4$ and m in formula (II) are the same as those of $R_1$, $R_2$ and n in formula (I), respectively.

By selecting the content and molecular weight of tertiary amino group in the polyol molecular skeleton and the molecular weight and structure of its side chain in such a range that the desired properties of polyol can be satisfied, tertiary amino alcohols having various catalytic properties adapted for required reactivities can be obtained, making it possible to prepare various polyurethanes without substantially using catalytic components.

Examples of the polyisocyanate compounds to be used in the present invention include aromatic, aliphatic or alicyclic polyisocyanate having two or more isocyanate groups, mixture of two or more of such a polyisocyanate, and modified polyisocyanates obtained by modifying these compounds. Specific examples of these polyisocyanate compounds include polyisocyanates such as tolylenediisocyanate (TDI), diphenylmethanediisocyanate (MDI), polymethylene polyphenyl polyisocyanate (crude MDI), xylylene diisocyanate, isophorone diisocyanate and hexamethylene diisocyanate; modified product thereof such as modified carbodiimide, modified burette, dimer and trimer; and isocyanate-terminated prepolymers obtained by the reaction of these polyisocyanates with active hydrogen compounds or tertiary amino alcohols according to the present invention.

In the present invention, the tertiary amino alcohol represented by formula (I) may be used as a polyol component in any proportion. The proportion of the tertiary amino alcohol (if a tertiary amino alcohol represented by formula (II) is included, the total amount of the weight of the two tertiary amino alcohols is considered) in all the polyol components is generally from 1 to 40% by weight, preferably from 5 to 30% by weight. By properly selecting the content of the tertiary amino alcohol, the catalytic properties can be

controlled. In addition, by combining the tertiary amino alcohol with other polyols, a polyurethane having desired shape and physical properties can be obtained. As such other polyols there can be used commonly known polyester polyols, polyether polyols, etc. Examples of such polyols include polyester polyols prepared from ordinary dibasic acids and polyvalent alcohols; polyether polyols obtained by adding ethylene oxide and/or propylene oxide to polyvalent alcohols (e.g., glycol, glycerin, pentaerythritol, trimethylol propane, sucrose) and polyvalent amines (e.g., triethylenediamine, 1,3-propanediamine, isophoronediamine); and hydroxyl-terminated compounds obtained by reacting a tertiary amino alcohol according to the present invention and other polyol components with a polyisocyanate compound in an NCO/OH proportion of 0.5 to 2.0. These polyols may be used singly or in admixture.

The proportion of all the polyols including the tertiary amino alcohol according to the present invention and other polyol components to the polyisocyanate compound is normally such that NCO/OH is generally from 0.5 to 2.0, preferably from 1.0 to 1.2 (molar ratio).

In the present invention, in addition to the foregoing polyisocyanate component and polyol component, a catalyst, a foaming agent, a surface active agent, a foam stabilizer, a colorant, a fire retardant, a stabilizer, etc. may be used, if desired. For the kind and added amount of these additives, commonly used kinds and added amount are enough.

The use of a tertiary amino alcohol represented by formula (I) according to the present invention as at least part of the polyol component makes it possible to use common catalysts depending on some purposes requiring higher moldability and workability, although the use of catalytic components is not essentially needed. Such a catalyst is not specifically limited. Amine catalysts or metallic catalysts which have heretofore been known may be used. These catalysts may be used, singly or in admixture, in combination with the foregoing tertiary amino alcohol.

Further, a crosslinking agent may be used as necessary. Examples of such a crosslinking agent which can be used in the present invention include glycols such as ethylene glycol, propylene glycol, diethylene glycol and 1,4-butanediol; polyvalent alcohols such as glycerin, pentaerythritol and sorbitan; alkanolamines such as diethanolamine and triethanolamine; aliphatic polyamines such as ethylenediamine and diethylenetriamine; and aromatic diamines such as 4,4-diphenylmethanediamine.

The present invention will be further described in the following examples, but the present invention should not be construed as being limited thereto. The "parts" as used herein indicates "parts by weight" unless otherwise specified.

EXAMPLE A

Into a 1-ℓ flask which had been equipped with a condenser and a separator to remove the produced water therefrom were charged 600 g of 1,6-hexanediol and 24 g (4% by weight based on the weight of diol) of a Cu/Ni/Pd catalyst. The reaction system was then heated under stirring while the air therein in the system was replaced by nitrogen. When the temperature in the system reached 100 °C, hydrogen gas was blown into the system at a flow rate of 10 ℓ/hr through a flowmeter, and the system was then heated to a temperature of 180 °C where a mixture of monomethylamine and hydrogen gases was then blown into the system at a rate of 40 ℓ/hr. The reaction was traced by the amine number and hydroxyl number. The reaction was allowed to proceed for about 4 hours. After the completion of the reaction, the catalyst was then removed by filtration to obtain a viscous light brown liquid.

EXAMPLE B

A reaction was effected for 4 hours in the same manner as in Example A except that the flow rate at which the hydrogen gas was blown into the system was 5 ℓ/hr and the flow rate at which the mixture of monomethylamine and hydrogen gases was blown into the system was 35 ℓ/hr.

EXAMPLE C

A reaction was effected for 40 hours in the same manner as in Example B except that n-butylamine was used as amine, the reaction temperature was 185 °C, and n-butylamine was added dropwise in the reaction system.

EXAMPLE D

A reaction was effected for 30 hours in the same manner as in Example B except that benzylamine was used as amine and benzylamine was collectively added to the reaction system.

EXAMPLE E

A reaction was effected for 8 hours in the same manner as in Example B except that the reaction temperature was 210°C, 1,9-nonanediol was used as alcohol, and the added amount of the catalyst was 2% by weight.

EXAMPLE F

A reaction was effected for 8 hours except that the reaction temperature was 210°C and triethylene glycol was used as alcohol.

The properties of the tertiary amino alcohols obtained in Examples A to F are set forth in Table 1.

TABLE 1

| Tertiary Amino Alcohol | | A | B | C | D (Example) | E (Example) | F (Example) |
|---|---|---|---|---|---|---|---|
| Formula (I) | $-R_1-$ | $-C_6H_{12}-$ | $-C_6H_{12}-$ | $-C_6H_{12}-$ | $-C_6H_{12}-$ | $-C_9H_{18}-$ | $-(C_2H_4O)_2(C_2H_4)-$ |
| | $-R_2$ | $-CH_3$ | $-CH_3$ | $-C_4H_9$ | $-CH_2-$ 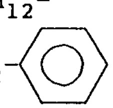 | $-CH_3$ | $-CH_3$ |
| | n | 4.1 | 3.8 | 9.2 | 3.9 | 13.5 | 3.3 |
| | Average Molecular Weight | 580 | 550 | 1550 | 850 | 2260 | 560 |
| Formula (II) | $-R_3-$ | - | $-C_6H_{12}-$ | $-C_6H_{12}-$ | $-C_6H_{12}-$ | $-C_9H_{18}-$ | $-(C_2H_4O)_2(C_2H_4)-$ |
| | $-R_4$ | - | $-CH_3$ | $-C_4H_9$ | $-CH_2-$ 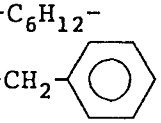 | $-CH_3$ | $-CH_3$ |
| | m | - | 3.5 | 8.0 | 3.5 | 11.5 | 3.0 |
| | Average Molecular Weight | - | 430 | 1320 | 770 | 1750 | 430 |
| (I)/(II) (Molar Ratio) | | 100/0 | 90/10 | 95/5 | 90/10 | 98/2 | 90/10 |

(Note) * The average molecular weight in Table 1 was determined by the ordinary gel permeation chromatography.

EXAMPLES 1 TO 8, COMPARATIVE EXAMPLES 1 AND 2

The reactivity of the tertiary amino alcohols A to F according to the present invention and comparative a polyol for wide use were determined as follows:

Into a 200-mℓ stoppered Erlenmeyer flask were charged 50 mℓ of a 0.1533 mol/ℓ tertiary amino alcohol set forth in Table 1 and 50 mℓ of a 0.1533 mol/ℓ TDI-100 (available from Mitsui Toatsu Chemicals, Inc.) (NCO/OH = 1.05 by molar ratio). The flask was then allowed to stand at a temperature of 30 °C in a constant temperature bath to effect reaction. The reaction was traced by the reduction in the concentration of isocyanate group in the reaction system. Specifically, sampling was conducted with a 10 mℓ pipette every 1 hour for 4 hours from the beginning of the reaction. The reaction solution thus sampled was added to 5 mℓ of a 25 g/ℓ n-butylamine-dioxane solution. The mixture was then thoroughly shaken. The solution was then titrated with a 0.2 N alcohol solution of hydrochloric acid. The concentration of isocyanate group remaining in the reaction solution was determined from the difference between the amount of hydrochloric acid thus consumed and the amount of hydrochloric acid consumed in 5 mℓ of the blank solution.

Assuming that the concentration of isocyanate group remaining after reaction is Y, 1/Y is directly proportional to the reaction time t. 1/Y values determined 2 hours after the beginning of reaction are set forth in Table 2.

TABLE 2

| Component (parts by weight) | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|
| Tertiary Amino Alcohol A | 100 | 50 | 10 | - | - | - | - | - | - | - |
| Tertiary Amino Alcohol B | - | - | - | 100 | - | - | - | - | - | - |
| Tertiary Amino Alcohol C | - | - | - | - | 100 | - | - | - | - | - |
| Tertiary Amino Alcohol D | - | - | - | - | - | 100 | - | - | - | - |
| Tertiary Amino Alcohol E | - | - | - | - | - | - | 100 | - | - | - |
| Tertiary Amino Alcohol F | - | - | - | - | - | - | - | 100 | - | - |
| Polyol for Wide Use | - | 50 | 90 | - | - | - | - | - | 100 | 100 |
| Catalyst *1 | - | - | - | - | - | - | - | - | - | 2 |
| 1/Y | 158 | 80 | 25 | 160 | 40 | 30 | 135 | 80 | 14 | 22 |

(Note) *1: N,N,N,N-Tetramethylhexamethylenediamine (Kaoriser No. 1 available from Kao Corporation)

EXAMPLES 9 TO 16, COMPARATIVE EXAMPLES 3 AND 4

The percent panel packing determined when a polyurethane foam is formed in the presence of the tertiary amino alcohols A to F according to the present invention or a polyol for wide use was measured as follows:

Starting materials for the preparation of polyurethane foam were mixed in a proportion as set forth in Table 3. Polyurethane foaming was effected in accordance with the ordinary procedure. Specifically, various polyols which had been kept to 20 °C, water, a surface active agent, a catalyst (N,N,N,N-tetramethylhexamethylenediamine; Kaoriser No.1 available from Kao Corporation), a foaming agent, and a polyisocyanate were mixed and stirred. The mixture was then poured into a panel for the measurement of percent packing to form a polyurethane foam.

The polyol for use in these examples is the same as that in Example 1 to 8 and Comparative Examples 1 and 2.

As the panel there was used an inverted L panel having a 450 × 500 × 35 mm vertical portion and a 450 × 450 × 35 mm horizontal portion. The panel was kept to a temperature of 40 °C during use.

The cream time (hereinafter referred to as "CT"), the gel time (hereinafter referred to as "GT") and the percent packing of polyurethane foam during its formation were evaluated. The term "CT" as used herein means the time passed until the beginning of foaming reaction after the initiation of agitation. GT indicates the time passed after the beginning of agitation until the state has been reached that when the tip of a sharp matter is brought into contact with the surface of the polyurethane foam and then withdrawn therefrom, the resin extends like a thread therebetween.

The percent packing indicates the length of the molded product obtained by pouring a predetermined amount (350 g) of the starting material of urethane which has been stirred.

The results are set forth in Table 3.

TABLE 3

| Component (parts by weight) | | Example 9 | Example 10 | Example 11 | Example 12 | Example 13 | Example 14 | Example 15 | Example 16 | Comparative Example 3 | Comparative Example 4 |
|---|---|---|---|---|---|---|---|---|---|---|---|
| | Tertiary Amino Alcohol A | 20 | 10 | 5 | - | - | - | - | - | - | - |
| | Tertiary Amino Alcohol B | - | - | - | 10 | - | - | - | - | - | - |
| | Tertiary Amino Alcohol C | - | - | - | - | 10 | - | - | - | - | - |
| | Tertiary Amino Alcohol D | - | - | - | - | - | 10 | - | - | - | - |
| | Tertiary Amino Alcohol E | - | - | - | - | - | - | 10 | - | - | - |
| | Tertiary Amino Alcohol F | - | - | - | - | - | - | - | 10 | - | - |
| | Polyol for Wide Use | 80 | 90 | 95 | 90 | 90 | 90 | 90 | 90 | 10 | 100 |
| | Water | 1.5 | 1.5 | 1.5 | 1.5 | 1.5 | 1.5 | 1.5 | 1.5 | 1.5 | 1.5 |
| | R-123 *1 | 50 | 50 | 50 | 50 | 50 | 50 | 50 | 50 | 50 | 50 |
| | L-5340 *2 | 2 | 2 | 2 | 2 | 2 | 2 | 2 | 2 | 2 | 2 |
| | Catalyst | - | - | - | - | - | - | - | - | 3 | 4 |
| | C-MDI *3 | INDEX 105 | INDEX 105 | INDEX 105 | INDEX 105 | INDEX 105 | INDEX 105 | INDEX 105 | INDEX 105 | INDEX 105 | INDEX 105 |
| Reactivity | CT | 7 | 9 | 13 | 9 | 11 | 13 | 13 | 10 | 12 | 9 |
| | GT | 35 | 40 | 52 | 38 | 46 | 54 | 55 | 52 | 57 | 45 |
| | Percent Packing | 76 | 76 | 76 | 76 | 75 | 75 | 76 | 78 | 71 | 69 |

(Note) *1: Silicone surface active agent (available from Nippon Unicar K.K.)
*2: 1,1,1-Trifluorodichloroethane
*3: Crude MDI (available from Mitsui Toatsu Chemicals, Inc.)

As mentioned above, in accordance with the present invention, even if R123, R141 or 356, which is an unprohibited chlorofluorocarbon, or water is used as a foaming agent, a heat insulating box comprising a

hard polyurethane foam having excellent insulating properties and adhesivity can be prepared. As the polyether polyol there is used an amine polyether containing a tertiary amino alcohol. Accordingly, the amine serves as an initiator, making it possible to increase the reaction rate without adding an expensive amine catalyst. Even if unprohibited chlorofluorocarbon such as R123, R141b and R356 having a high boiling point is used as a foaming agent, a heat insulating box having excellent heat insulating properties can be obtained. As a result, a heat insulating box having excellent insulating properties can be provided while meeting the environmental requirements without using as a foaming agent any prohibited chlorofluorocarbon that is likely to destroy the ozone layer. Accordingly, the thickness of the wall of the resulting box can be reduced, making it possible to increase the inner volume of refrigerators or the like.

Further, the enhancement of the reaction rate results in the reduction of the charged amount of the foaming agent, making it possible to reduce the curing and enhance the brittleness of the foam.

Moreover, the present invention can eliminate the necessity for an expensive and harmful amine catalyst which has heretofore been added additionally, making it possible to reduce the production cost while providing a good working environment.

While the invention has been described in detail and with reference to specific embodiments thereof, it will be apparent to one skilled in the art that various changes and modifications can be made therein without departing from the spirit and scope thereof.

## Claims

1. A heat insulating box comprising an outer box and an inner box, the gap therebetween being filled with a hard polyurethane foam prepared by the reaction of polyols and isocyanates in the presence of a foaming agent, in which a part or the whole of the polyols comprises one or more tertiary amino alcohols represented by the following formula (I):

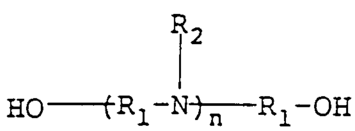

(I)

wherein substituents represented by $R_1$, which may be the same or different, each represents a straight-chain or branched alkylene group having form 2 to 24 carbon atoms, an alicyclic alkylene group, a substituted or unsubstituted cycloalkylene group, a substituted or unsubstituted arylene group, an aralkylene group or $-(CH_2CH_2O)_p-(CH_2CH_2)_q-$, in which p represents 0 or a positive integer and q represents a positive integer; substituents represented by $R_2$, which may be the same or different, each represents a straight-chain or branched alkyl group having from 1 to 24 carbon atoms, an aryl group or an aralkyl group; and the average polymerization degree n represents a positive integer of 1 to 50.

2. The heat insulating box comprising a hard polyurethane foam as claimed in claim 1, wherein in formula (I) the substituents represented by $R_1$, which may be the same or different, each represents a straight-chain or branched alkylene group having from 6 to 9 carbon atoms; the substituents represented by $R_2$, which may be the same or different, each represents a straight-chain or branched alkyl group having from 1 to 4 carbon atoms; and the average polymerization degree n represents a positive integer of 1 to 30.

3. The heat insulating box comprising a hard polyurethane foam as claimed in claim 1, wherein in formula (I) the substituents represented by $R_1$, which may be the same or different, each represents a straight-chain or branched alkylene group having from 6 to 9 carbon atoms; the substituents represented by $R_2$, which may be the same or different, each represents a straight-chain or branched alkyl group having from 1 to 4 carbon atoms; and the average polymerization degree n represents a positive integer of 2 to 18.

4. The heat insulating box comprising a hard polyurethane foam as claimed in claim 1, which further comprises, in addition to the tertiary amino alcohol represented by formula (I), one or more tertiary amino alcohols represented by the following formula (II):

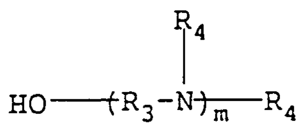

(II)

wherein substituents represented by $R_3$, which may be the same or different, each represents a straight-chain or branched alkylene group having from 2 to 24 carbon atoms, an alicyclic alkylene group, a substituted or unsubstituted cycloalkylene group, a substituted or unsubstituted arylene group, an aralkylene group or $-(CH_2CH_2O)_r-(CH_2CH_2)_s-$, in which r represents 0 or a positive integer and s represents a positive integer; substituents represented by $R_4$, which may be the same or different, each represents a straight-chain or branched alkyl group having from 1 to 24 carbon atoms, an aryl group or an aralkyl group; and the average polymerization degree m represents a positive integer of 1 to 50.

**5.** The heat insulating box comprising a hard polyurethane foam as claimed in claim 4, wherein the tertiary amino alcohol represented by formula (II) is used in an amount of 30% by weight or less of the total amount of the weight of the tertiary amino alcohol represented by formula (I) and the tertiary amino alcohol represented by formula (II).

**6.** The insulating box comprising a hard polyurethane foam as claimed in claim 4, wherein at least one of the substituents represented by $R_1$ in formula (I) and the substituents represented by $R_3$ in formula (II), which may be the same or different, represents a straight-chain or branched alkylene group having from 6 to 9 carbon atoms; at least one of the substituents represented by $R_2$ in formula (I) and the substituents represented by $R_4$ in formula (II), which may be the same or different, represents a straight-chain or branched alkyl group having from 1 to 4 carbon atoms; and at least one of the average polymerization degree n in formula (I) and the average polymerization degree m in formula (II) represents a positive integer of 1 to 30.

European Patent Office

# EUROPEAN SEARCH REPORT

Application Number
EP 93 11 9131

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 488 219 (KAO)<br>* page 2, line 24 - page 5, line 2 *<br>* page 7, line 49 - page 8, line 19; claims 1-18; examples 9-55 *<br>--- | 1-6 | C08G18/32<br>C08G18/66 |
| X | WO-A-86 01522 (DOW)<br>* page 1, line 8 - page 11, line 3; claims 1-10 *<br>--- | 1-6 | |
| A | EP-A-0 502 516 (KAO)<br>* page 3, line 11 - page 7, line 56; claims 1-18 *<br>----- | 1 | |
| | | | TECHNICAL FIELDS SEARCHED (Int.Cl.5) |
| | | | C08G |

The present search report has been drawn up for all claims

| Place of search | Date of completion of the search | Examiner |
|---|---|---|
| THE HAGUE | 24 February 1994 | Bourgonje, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)